# NEUE EUROPÄISCHE PATENTSCHRIFT

(11) **EP 0 245 647 B2**
(45) Veröffentlichungstag und Bekanntmachung des Hinweises auf die Entscheidung über den Einspruch: **25.09.1996**
(45) Hinweis auf die Patenterteilung: 23.05.1990
(21) Anmeldenummer: 87105066.2
(22) Anmeldetag: 06.04.1987
(51) Int. Cl.: C08F 20/12, C08L 33/10

(54) **Polymethacrylat-Formmasse mit hoher Wärmeformbeständigkeit und hoher thermischer Stabilität**
Polymethacrylate moulding masses showing a higher heat resistance and higher heat stability
Masse de moulage de polyméthacrylate à haute résistance à la chaleur et haute stabilité thermique

(30) Priorität: 16.04.1986 DE 3612791
(43) Veröffentlichungstag der Anmeldung: 19.11.1987
(73) Patentinhaber: Röhm GmbH, 64293 Darmstadt (DE)
(72) Erfinder: Siol, Werner, Dr., D-6100 Darmstadt (DE); Heil, Ernst, D-6081 Stockstadt (DE); Wenzel, Franz, Dr., D-6100 Darmstadt (DE); Arndt, Peter Joseph, Dr., D-6104 Seeheim-Jugenheim (DE); Terbrack, Ulrich, D-6107 Reinheim 2 (DE)

(56) Entgegenhaltungen:
- EP-A- 0 187 715
- DE-A- 1 645 232
- DE-A- 3 222 002
- DE-B- 1 745 763
- GB-A- 1 075 273
- GB-A- 1 182 807
- US-A- 2 450 000
- US-A- 3 882 198
- Chemie, Physik und Technologie der Kunststoffe, Band 9, Springer Verlag, 1967, S. 162.167, 198-199, 211, 216-229
- C. Schildknecht "Vinyl and related Polymers", J. Wiley, 1952, S. 224-227
- Kunststoff-Taschenbuch, 22. Ausgabe, Carl Hanser Verlag, 1983, S. 273-276
- Kirk Othmer, Encyclopaedia of Chemical Technology, vol. 1, 3rd Edition, 1978, S. 386-391
- Turro et al., J. Polymer Sci., Polymer Chem. Ed., vol. 21, 1983, S. 1085-1096
- P. Förster et al., Kunststoffe 69, 1979, S. 146-153

## Beschreibung

### Gebiet der Erfindung

Die Erfindung betrifft eine Formmasse auf Polymethylmethacrylat-Basis und daraus hergestellte Formkörper mit ausgezeichneter Thermostabilität, damit guter Verarbeitbarkeit, und einer vergleichbar hohen Wärmeformbeständigkeit, sowie ein Verfahren zur Herstellung derselben.

### Stand der Technik

Polymethacrylat-Formmassen werden in der Regel durch diskontinuierliche oder kontinuierliche Substanzpolymerisation sowie durch Perlpolymerisation hergestellt. Das diskontinuierliche Verfahren, das bei niedrigen Temperaturen oberhalb 20 Grad Celsius durchgeführt wird, ist sehr zeit- und arbeitsintensiv, weshalb es in neuerer Zeit durch kontinuierliche, jedoch technisch aufwendige Polymerisationsverfahren fast vollständig abgelöst wurde. Die Polymerisation wird dabei beispielsweise in einer Zone steigender Temperaturen von 130 bis 250 Grad Celsius in einer als Extruder ausgeführten Polymerisationsanlage durchgeführt. Vor der Isolierung des Polymerisates als Extrudat, wird in einer Entgasungszone nicht umgesetztes Monomeres, das bis zu 40 % des eingesetzten sein kann, abgesaugt und der Polymerisation wieder zugeführt.

Bei dem dritten Verfahren, der Peripolymerisation, muß man zur Erreichung brauchbarer Raum-ZeitAusbeuten, die Polymerisation bei Temperaturen um 100 Grad Celsius und in Gegenwart von relativ hohen Initiatorkonzentrationen durchführen (Kunststoff-Handbuch, Band IX, Polymethacrylate, Carl Hanser Verlag, München, 1975, Seiten 22 bis 35 und Ullmanns Encyklopädie der technischen Chemie, 4. Auflage, Band 19, Seiten 22 bis 27).

Darüber hinaus ist die Herstellung von PMMA-Formmasse durch Lösungspolymerisation und nachfolgendes Abdampfen des Lösungsmittels bekannt.

Zur thermischen Stabilisierung von Polymethylmethacrylat-Formmassen wird das Methylmethacrylat in der Regel mit wenigen Prozenten eines Acrylsäureesters oder mit Styrol copolymerisiert.

Die Polymerisationen zur Herstellung thermoplastisch verarbeitbarer Polymethylmethacrylatmassen werden im allgemeinen in Gegenwart von übertragungsreglern, vor allem in Gegenwart von Mercaptanen, durchgeführt, die als Kettenabbruch-Regler in den Polymerisationsmechanismus eingreifen und so den Polymerisationsgrad und die chemische Struktur der Polymerendgruppen beeinflussen. Mit Mercaptanen als den bekanntesten Reglem, entstehen so im allgemeinen Polymere, die mehr thermisch stabilere Endgruppen besitzen als ungeregelt hergestellte Polymethylmethacrylate (DE-C 16 45 232). Die Natur der Endgruppe ist für die thermische Stabilität an Polymethylmethacrylat-Formmassen von besonderer Bedeutung. So konnte in Modellversuchen gezeigt werden (P. Cacioli et al., Polymer Bulletin 11, 325 (1984)), daß Polymethylmethacrylatketten mit gesättigten Endgruppen, wie sie durch Übertragung gebildet werden, bis zu Temperaturen > 300 Grad Celsius stabil sind, während Polymerketten, die durch Disproportionierungsabbruch gebildet worden sind und demzufolge eine olefinische Doppelbindung am Kettenende aufweisen, bereits bei 255 Grad Celsius abbauen. Ganz besonders instabil sind PMMA-Ketten, die durch Rekombinationsabbruch entstanden sind. Diese Polymerketten sind nur bis 190 Grad Celsius stabil.

Zur Erzielung einer befriedigenden thermischen Stabilisierung, werden der Einbau von Acrylsäureestem und die Polymerisation in Gegenwart von Mercaptanen bei den technischen Herstellungsverfahren der Polymethylmethacrylat-Formmassen vorteilhaft kombiniert angewendet. Darüber hinaus werden zur besseren Verarbeitung niedermolekulare Stabilisatoren zugesetzt.

Weiter ist bekannt, daß der sterische Bau des Polymethylmethacrylates dessen physikalische Eigenschaften beeinflußt. Der sterische Bau der Polymerisate, bekannt als Taktiztät, läßt sich in Abhängigkeit vom Polymerisationsverfahren in weiten Grenzen variieren. Während beispielsweise die Polymerisation mit Phenylmagnesiumbromid in Toluol bei 0 Grad Celsius zu einem nahezu reinen isotaktischen Produkt führt, wird mit Ziegler-Katalysatoren in demselben Lösungsmittel bei minus 90 Grad Celsius ein hoch syndiotaktisches Produkt erhalten. (S. Bywater and P.M. Toporowski, Polymer, 13, 94 (1972)). Die radikalische Polymerisation liefert je nach Reaktionstemperatur Polymerisate mit unterschiedlicher Taktizität. So nimmt mit fallender Polymerisationstemperatur der syndiotaktische Anteil im Polymerisat zu, was sich physikalisch z.B. im Anstieg der Glastemperatur Tg und damit der Wärmeformbeständigkeit, z.B. in der Angabe als Vicat-Erweichungstemperatur, bemerkbar macht (Kunststoff-Handbuch IX., Seiten 28 und 29). Danach schließen die Verfahren des Standes der Technik die wirtschaftliche Herstellung einer Polymethylmethacrylat-Formmasse mit hoher Wärmeformbeständigkeit und gleichzeitig hoher thermischer Stabilität einander aus.
Während die Polymerisation in Substanz bei niedrigen Temperaturen, z.B. 40 Grad Celsius, eine Polymethylmethacrylatformmasse mit der gewünschten Taktizität (hoher Anteil syndiotaktischer und heterotaktischer Triaden), also eine Formmasse mit relativ hoher Wärmeformbeständigkeit ergibt, muß zur Erzielung hoher Raum-Zet-Ausbeuten eine vergleichsweise hohe Initiatorkonzentration eingesetzt werden.
Dadurch entstehen vermehrt Polymerketten, die durch einen Rekombinationsabbruch oder Disproportionierungsabbruch beendet werden, d.h. Polymerketten mit Endgruppen, die gemäß P. Cacioli et al., Polymer Bulletin 11, 325 (1984) eine geringe Thermostabilität erwarten lassen. Andererseits erreicht man mit der Polymerisation bei erhöhter Temperatur, z.B. in einem kontinuierlichen Polymerisationsverfahren bei beispielsweise 180 Grad Celsius bereits mit relativ geringen Mengen an Initiator, Polymere mit einer guten Thermostabilität bei guter Raum-Zeit-Ausbeute. Aufgrund der hohen Polymerisationstemperatur erhält man jedoch ein Polymerisat mit geringerer Wärmeformbeständigkeit (bedingt durch die geänderte Takfizität).
Auch die häufig verwendete Maßnahme zur Verbesserung der Thermostabilität, die Copolymerisation von ca. 1 bis 10 Gew.% Acrylsäureester, bewirkt zwar die gewünschte Verbesserung der Thermostabilität hat aber eine deutliche Absenkung der Wärmeformbeständigkeit zur Folge.

### Aufgabe und Lösung

Es war daher die Aufgabe der Erfindung, ein technisches und wirtschaftliches Verfahren zur Herstellung von Polymethylmethacrylat-Formmasse mit erhöhter Wärmeformbeständigket und hoher thermischer Stabilität bereitzustellen.
Damit sollte also versucht werden, den bisher bekannten Widerspruch von PMMA-Formmassen mit hoher Wärmeformbeständigkeit auf der einen Seite und PMMA-Formmassen mit hoher Verarbeitungsstabiltät andererseits aufzulösen.

Es wurde gefunden, daß überraschenderweise Polymethylmethacrylat-Formmassen hergestellt werden können, die sowohl eine im Vergleich zum Stand der Technik deutlich verbesserte, d.h. eine ca. 10 bis 15 Grad Celsius höhere, Wärmeformbeständigkeit, als auch eine sehr gute, im Vergleich zum Stand der Technik ebenfalls verbesserte, Verarbetungsstabilität aufweisen.

Polymethylmethacrylat-Formmassen mit dieser guten Eigenschaftskombination werden mit hoher Raum-Zeit-Ausbeute hergestellt durch Emulsionspolymerisation von Methylmethacrylat oder durch Emulsionspolymerisation eines Monomerengemisches, das neben Methylmethacrylat bis zu ca. 20 Gew.-% eine oder mehrere weitere mit Methylmethacrylat copolymerisierbare Verbindungen enthält, wenn zur Polymerisation sehr geringe Initiatormengen und übliche Reglermengen eingesetzt werden.

Aus den Emulsionen kann die neue Formmasse als Festsubstanz, beispielsweise durch Ausfällen, durch Sprühtroknen oder vorteilhafterweise durch Gefrierkoagulation oder durch Abquetschen mit dem Extruder gewonnen werden. Man erhält so eine Formmasse, die bei der Verarbeitung Formstücke mit guter optischer Qualität, z.B. Lichtdurchlässigkeiten im nicht pigmentierten Zustand von > 91 % liefert. Ein Vorteil des neuen Verfahrens zur Herstellung von Polymethacrylat-Formmassen ist auch darin zu sehen, daß die nach diesem Verfahren hergestellten Polymethacrylat-Formmassen gegenüber entsprechenden Formmassen nach dem Stand der Technik einen sehr geringen Restmonomer-Anteil enthalten (kleiner 0,5, insbesondere kleiner 0,3, bevorzugt kleiner 0,2, und ganz besonders bevorzugt kleiner 0,1 Gew.-%). Darüber hinaus ist auch in der verarbeiteten Formmasse, d.h. im fertigen Formteil ein niedriger Restmonomerengehalt vorhanden. Dies ist eine Folge der außerordentlich guten Thermostabilität der erfindurlgsgemäßen Formmasse.

Das Polymerisat stellt mit einer Wärmeformbeständigkeit von ca. 120 Grad Celsius , d.h. einer Wärmeformbeständigkeit von > 112°C gemessen als Vicat-Erweichungstemperatur nach DIN 53 460, gegenüber einer handelsüblichen PolymethylmethacrylatFormmasse mit einem Normwert von ca. 108 Grad Celsius, und einer guten thermischen Verarbeitbarkeit bei hoher thermischer Stabilität, eine neue Polymethacrylat-Formmasse dar.

### Durchführung der Erfindung

Ausführungen von Emulsionspolymerisationen, auch mit Methylmethacrylat, im Labor- oder Technikmaßstab sind seit langem bekannt und sind u.a. in Methoden der organischen Chemie (HoubenWeyl), Band XIV/1 (1961), Makromolekulare Stoffe, Seite 145 oder Seiten 1048 bis 1053 und in Ullmanns Encyklopädie der technischen Chemie, 4. Auflage, Band 13, Seite 601; Band 15, Seite 191 und Band 19, Seite 132ff beschrieben. Bedeutung haben Acrylatdispersionen, die u.a. auch Methylmethacrylat und andere Methacrylatmonomere als Comonomere enthalten, in technischen Bereichen, wie für Anstrichzwecke und für verschiedene Beschichtungsanwendungen. Die Mitverwendung von Reglem, meist Schwefelverbindungen, wie längerkettigen Alkylmercaptanen und Thioglykolestern, zur Molekulargewichtsregulierung bei deren Herstellung ist bekannt Obwohl auch schon Emulsionspolymerisationen von Methylmethacrylat in Gegenwart von Mercaptanen, wie n-Amylmercaptan bei 50 Grad Celsius zu Übenragungs-Regler-Studien durchgeführt wurden (Smith, J.Am.Chem.Soc. 68, 2060, 1946), sind bisher noch keine Polymethylacrylate bekannt, die, wie erfindungsgemäß, als Formmassen verarbeitbar sind und eine mit den kontinuierlich bei hohen Temperaturen hergestellten PMMA-Formmassen vergleichbar hohe thermische Stabilität haben, sich durch eine bisher von PMMA-Formmassen noch nicht erreichte Wärmeformbeständigkeit auszeichnen, gute optische Eigenschaften besitzen, und die durch Emulsionspolymerisation hergestellt sind.

Die bisherigen Arbeiten zur Emulsionspolymerisation konzentrierten sich vor allem auf solche Produkte, bei denen es auf die besondere Feinteiligkeit der Emulsionspolymerisate ankommt, z.B. bei PM-MA als Verarbeitungshilfsmittel für PVC (US-A 3 882 198) oder aber auf Schlagmodifizierungsmittel, da über Emulsionspolymerisation ein gezielter Aufbau von Gummiteilchen möglich ist. Die erfindungsgemäße Polymethacrylat-Formmasse mit hoher Wärmeformbeständigkeit und hoher Thermostabilität läßt sich wie folgt charakterisieren. Danach sind wenigstens 75 Gew.-%, bevorzugt wenigstens 90 Gew.-%, besonders bevorzugt wenigstens 95 Gew.-% der Polymermoleküle entsprechend der Formel I 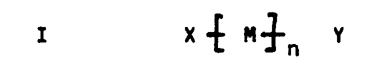 aufgebaut.

Darin stehen M für die Monomerbausteine und n für den Polymerisationsgrad. X ist insbesondere Teil des Kettenübertragungsreglers, XY, insbesondere X-H, wozu vor allem Mercaptane XH = ASH zu rechnen sind, aber auch andere Überträger wie aliphatische oder aromatische, gegebenenfalls substituierte Kohlenwasserstoffe mit einem beweglichen H-Atom. Weiter ist kennzeichnend für die erfindungsgemäße Formmasse, daß die Taktizität der Polymerkette 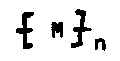 zu weniger als 5 % isotaktisch und in der Regel > 60 % syndiotaktisch ist. (Jeweils gemessen als Triaden). Besonders bevorzugt sind Polymerketten mit einem isotakischen Anteil < 3 Gew.-%.

Die erfindungsgemäßen Polymethacrylat-Formmassen haben demnach unter Berücksichtigung der Monomeren eine der folgenden Formel II entsprechende Zusammensetzung aus Monomeren mit den Anteilen a), b), c) und d), wobei mit dieser Formel II über den tatsächlichen Aufbau der Polymerketten, d.h. über die Folge der verschiedenen Monomeren im Polymeren, keine Aussagen gemacht werden. 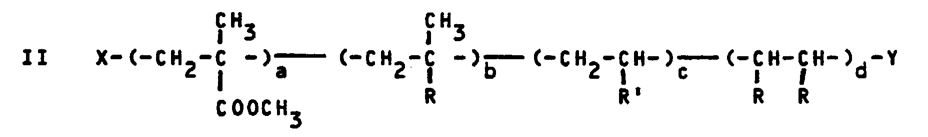 Mindestens 75 Gew.%, bevorzugt wenigstens 90 Gew.-%, besonders bevorzugt wenigstens 95 Gew.-%, der so zusammengesetzten Polymermoleküle enthalten wie in dem Formelbild II angegeben als Endgruppen auf der einen Molekülsete solche mit X und am anderen Molekülende die Endgruppe Y, vorzugsweise ein Wasserstoffatom. (Vgl. Formel I).

In der oben angegebenen Formel II bedeuten:
R : CN, COOR", CONHR''' oder R und R im Anteil d zusammengenommen eine Anhydrid- bzw. vorzugsweise eine mit R" substituierte Imidbrücke,
mit R": H, Alkyl oder Alkenyl mit 2 bis 6 C-Atomen, Cycloalkyl mit 5 bis 12 C-Atomen, Aryl, mit 6 bis 12 C-Atomen, sowie
R''': CH₃, R".
R' : R, R", R", OCOR''',
a = 0,8 bis 1 , vorzugsweise 0,95 bis 1, besonders bevorzugt 0,98 - 1
b = 0 bis 0,2, vorzugsweise 0 bis 0,05, besonders bevorzugt 0 bis 0,02
c = 0 bis 0,2, vorzugsweise 0 bis 0,05, besonders bevorzugt 0 bis 0,02
d = 0 bis 0,2, vorzugsweise 0 bis 0,05, besonders bevorzugt 0 bis 0,02

X und Y sind Teile des Kettenübenragungsreglers XY, wozu insbesondere Mercaptane ASH mit X = AS zählen, worin A ein aliphatischer oder aromatischer Rest mit 1 bis 18 C-Atomen bedeutet, der auch noch weitere funktionelle Gruppen, wie beispielsweise Carboxylgruppen oder Estergruppen oder OH-Gruppen enthalten kann.

Beispiele solcher Mercaptane sind n-Butylmercaptan, tert.-Dodecylmercaptan, Thiophenol, Thioglykolsäureester, Mercaptoethanol, aber auch polyfunktionelle Mercaptane mit 2 bis 6 SH-Gruppen, wie z.B. Ester der Thioglykolsäure von Monothioäthylenglykol, Äthylenglykol, Glycerin, Pentaerythrit. Als Regler XY können auch halogenhaltige Verbindungen, wie beispielsweise CCl₄ oder Benzylbromid eingesetzt werden, wobei dann die Endgruppe Y ein Halogenatom ist. Bevorzugt sind jedoch halogenfreie Regler, insbesondere Mercaptane oder Kohlenwasserstoffe mit einem beweglichen Wasserstoffatom, z.B. Cumol. Besonders bevorzugt sind also Regler des Typs X-H.

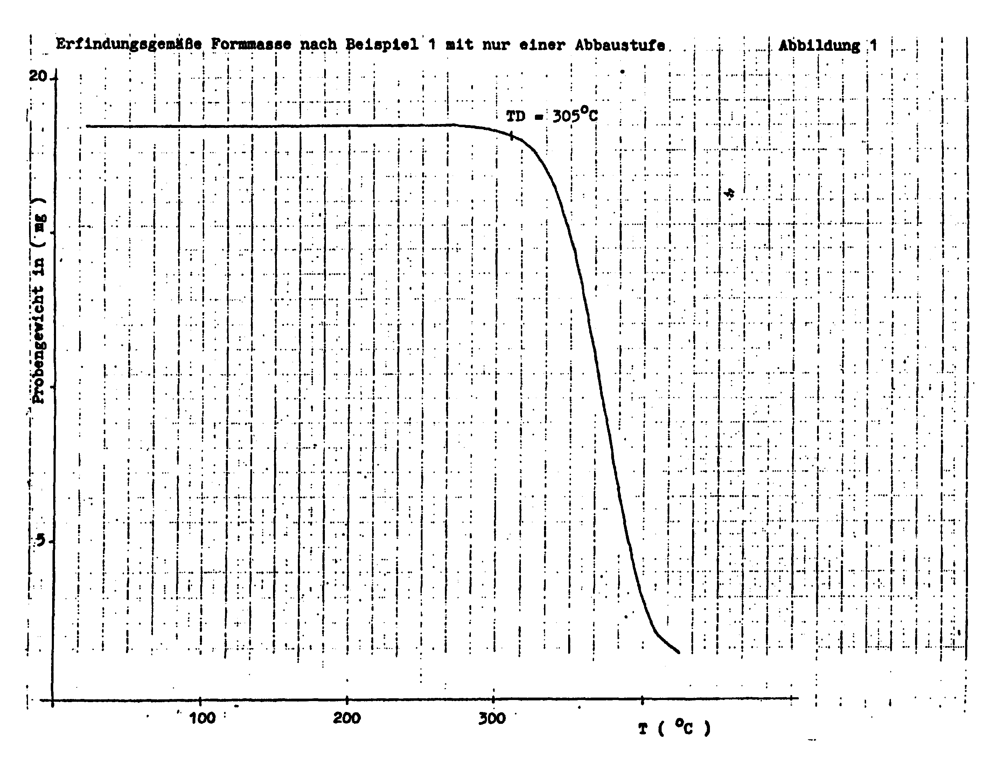

Als erfindungsgemäße Polymethylmethacrylat-Formmassen werden danach solche Massen verstanden, an deren Aufbau mehr als 80 Gew.-% Methylmethacrylat beteiligt sind, insbesondere solche mit mehr als 95 Gew.-% und vorzugsweise solche mit 98 bis 100 Gew.-% Methylmethacrylat als Monomerbaustein, und die gegebenenfalls noch Comonomere der oben angegebenen Art, wie Acryl- bzw. Methacrylnitril, (Meth)acrylester-bzw. -amide, Styrol, p-methylstyrol, Vinylester oder Vinylamide, Maleinsäure oder dessen Derivate enthalten, und die durch die angegebenen Endgruppen thermisch stabilisiert sind, d.h. Massen, die einen TD-Wert von > 290 Grad Celsius besitzen.
Als TD-Wert ist dabei diejenige Temperatur, gemessen in Grad Celsius, zu verstehen, bei der die Polymerprobe während einer dynamischen gravimetrischen Messung im Vakuum mit einer Aufheizgeschwindigkeit von 5 Grad/Minute 2 % Gewichtsverlust zeigt. (Siehe dazu Abbildungen 1 bis 4).

Die Herstellung der neuen Formmasse wird erfindungsgemäß durch Emulsionspolymerisation bei Temperaturen von 0 bis 100 Grad Celsius, besonders bevorzugt 20 bis 90 Grad Celsius, durchgeführt. Allgemeine Ausführungsbeschreibungen sind in der einschlägigen Literatur, wie z.B. Methoden der organischen Chemie XIV/1, (1961), Seiten 1048 bis 1053 oder in Ullmanns Encyklopädie der technischen Chemie, 4. Auflage, Band 19, Seiten 11 bis 13 und 24 dargelegt. Die Polymerisation wird bevorzugt unter Ausschluß von Sauerstoff durchgeführt. (Arbeiten unter Kohlendioxid, Stickstoff und in geschlossenen Apparaturen ohne Gasphase).

Als Polymedsafionsinitiatoren werden beispielsweise wasserlösliche Peroxoverbindungen, wie Alkalipersulfate oder Wasserstoffperoxid, aber auch organische Peroxide, wie t-Butyl-perpivalat, Azoinitiatoren wie AIBN oder Redoxsysteme wie Natriumpyrosulflt/Kaliumpersulfat, verwendet. Auch kann die Polymerisation photochemisch initiiert werden.

Wesentlich für die Herstellung der erfindungsgemäßen thermostabilen Polymethacrylat-Formmassen mit hoher Wärmeformbeständigkeit ist dabei nicht so sehr die Art des eingesetzten Initiators als vielmehr die Menge des Initiators. So ist darauf zu achten, da die kinetische Kettenlänge möglichst groß ist. (Die kinetische Kettenlänge ν• gibt an, wieviel Monomermoleküle an ein Radikal addiert werden können, bevor das Radikal durch eine Abbruchhreakfion vernichtet wird; vgl. H.G. Elias, Makromoleküle, S. 461, Hüthig & Wepf, Basel-Heidelberg, 2. Auflage).

Bei der Herstellung der erfindungsgemäßen Formmassen beträgt die kinetische Kettenlänge wenigstens 1000. Bevorzugt wird die Polymerisation so durchgeführt, daß wenigstens 10 000 und ganz besonders bevorzugt so, daß wenigstens 100 000 Monomere an ein Radikal addiert werden, bevor es durch Abbruch desaktiviert wird (ensprechend einer kinetischen Kettenlänge ν• > 10 000 bzw. 100 000).

Das Molekulargewicht der Polymeren wird mit Hilfe des Kettenübertragungsreglers X-Y auf einen Wert von ca. 30 000 - 500 000 g/Mol eingestellt. (Für reines Polymethylmethacrylat, Molekulargewicht des Monomeren 100 g/Mol, entspricht dies ca. 300 - 5000 Monomerbausteine pro Polymermolekül). Dabei wird den Reaktionsbedingungen gemäß die Polymerkette mit Y beendet, während X eine neue Polymerkette startet.

Wie ein einfacher Vergleich (Monomerbausteine pro Polymermolekül/kinetische Kettenlänge) zeigt, ist deutlich erfindungsgemäß die kinetische Kettenlärlge ν• deutlich größer als die Anzahl der Monomerbausteine pro Polymermolekül. So hat beispielsweise ein erfindungsgemäßes Polymethylmethacrylat-Polymeres ca. 300 - 5 000 Monomerbausteine im Molekül, demgegenüber ist erfindungsgemäß die kinetische Kettenlänge ν• > 1000, bevorzugt > 10 000 und ganz besonders bevorzugt > 100 000. Das heißt jedes einzelne Initiatorradikal erzeugt statistisch gesehen wenigstens 5, besonders bevorzugt wenigstens 50 Polymermoleküle.

Für die praktische Durchführung heißt das, daß die Emulsionspolymerisation erfindungsgemäß mit einer möglichst geringen Menge an Initiator durchgeführt wird.
Die Menge des Initiators ist daher (bezogen auf die Gesamtmenge der eingesetzten Monomeren) auf 0,0001 - 1 Gew.-%, bevorzugt auf 0,001 - 0,2 Gew.-% und besonders bevorzugt auf auf 0,002 - 0,05 Gew.-% beschränkt.

Ein wesentliches Merkmal der Erfindung besteht darin, daß wenigstens 90 Gew.-% des gesamten Polymeren mit dieser geringen Initiatormenge hergestellt wird. Es ist durchaus im Sinne der Erfindung, die Emulsionspolymerisation durch eine vergleichsweise große Menge an Initiator, z.B. 0,3 Gew.-% einzuleiten, um so die im System vorhandenen Inhibitoren und Stabilisatoren zu beseitigen, wenn gewährleistet ist, daß > 90 Gew.% des Polymeren mit deutlich weniger Initiator hergestellt werden. Dies ist beispielsweise mit einem schnell reagierenden Redox-lnitiator-System, z.B. Kaliumperoxodisulfat"Natriumbisulfit/Eisen, möglich. (Siehe auch Durchführungbeispiele). In diesem Fall kann dann davon ausgegangen werden, daß in der Startphase, d.h. bevor 10 Gew.-% des eingesetzten Monomeren polymerisiert sind, bereits > 90 Gew.-% des eingesetzten Redox-System zerfallen sind, so daß die restlichen > 90 Gew.-% des Polymeren mit weniger als 0,03 Gew.-% an Initiator hergestellt werden. Es ist also darauf zu achten, daß in die Polymerisation, wenn sie einmal gestartet ist, nicht durch ständiges Nachliefem von größeren Mengen an Initiator eingegriffen wird.
Es ist daher kein erfindungsgemäßes Verfahren, zu dem polymerisierenden Ansatz Monomere oder Monomeremulsionen zuzudosieren, die größere Mengen an Stabilisator enthalten und im Ausgleich dafür die Aufrechterhaltung der Polymerisation durch einen steten Zerfall von Initiator zu gewährleisten. Vielmehr ist es im Sinne der Erfindung, sofem Monomere überhaupt in den polymerisierenden Ansatz zudosiert werden, diese möglichst sauerstoff-frei und nahezu frei von Inhibitoren zuzugeben. Es ist vorteilhaft, daß der polymerisierende Ansatz mindestens schon 45 Gew.-%, bevorzugt 90 Gew.-%, der Gesamtmonomeren enthält, bevor 20 Gew.-%, bevorzugt 10 Gew.-%, der Monomeren polymerisiert sind. Besonders bevorzugt ist es jedoch, alle zur Emulsionspolymerisation erforderlichen Salze, Emulgatoren, Monomeren, Regler, Initiatoren, das Wassers etc. gemeinsam in einem Rührkessel vorzulegen (= Batch-Ansatz). Hierbei wird nach einer kurzen Inhibierungsphase, bedingt durch die im System vorhandenen Reste an Polymerisationsinhibitoren und die geringe Menge an eingesetztem Initiator, die Polymerisation anspringen. In einer bevorzugten Ausführungsform legt man also das Wasser, die Monomeren, alle Hilfsstoffe bei einer niedrigen Temperatur (beispielsweise 0 Grad Celsius bis 40 Grad Celsius) vor, startet die Reaktion durch Zugabe der geringen Menge an Initiator und polymerisiert.

In der Regel wird die Kühlleistung des Rührkessels nicht ausreichen, um die Polymerisation bei einer Temperatur von z.B. 30 Grad Celsius zu halten. In der Regel wird vielmehr die Polymerisationswärme den Reaktionsansatz auf eine Temperatur von ca. 70 Grad Celsius erwärmen.
Es ist auch möglich, nach Abkühlen des Reaktionsansatzes auf Raumtemperatur, noch einmal Monomeres, Regler, Emulgator, Initiator und gegebenenfalls weitere Hilfsstoffe zuzugeben und die Polymerisation emeut zu starten. Dabei wird also die 1. Polymerisationsstufe als Saatlatex für die zweite Reaktionsstufe verwendet. Bei diesem 2-fachen Batch-Ansatz ist es durchaus von Interesse, durch Zugabe einer weiteren, feinteiligen Kunststoffdispersion im Endprodukt Latex-Teilchen mit einer bimodalen oder allgemein multimodalen Teilchengrößenverteilung zu erzeugen. Diese Polymethylmethacrylatdispersion mit mulfimodaler Teilchengrößenverteilung ermöglicht ein vor allem wirtschaftliches Verhältnis von Polymer/Wasser in der Dispersion. Ganz allgemein sind Dispersionen mit einem Feststoffgehalt mit mehr als 30 Gew.% und besonders > 45 Gew.-% und ganz besonders mehr als 50 Gew.-% bevorzugt. Die Teilchengröße der Polymeriatices liegt im Bereich von 50 - 2 000 nm, bevorzugt 100 - 600 nm (Teilchendurchmesser).

Die Emulsionspolymerisation kann auch kontinuierlich, z.B. in einer Rührkesselkaskade oder in einem Rohrreaktor durchgeführt werden, bevorzugt wird das Monomere bzw. das Monomerengemisch an höchstens 3 Positionen der kontinuierlich arbeitenden Emulsionspolymerisationsanlage zugesetzt. Unter Berücksichtigung der genannten Einschränkung, daß eine möglichst sauerstoff- und inhibitor-arme Monomermischung bzw. Monomeremulsion zudosiert wird, ist auch die Emulsionspolymerisation mit Monomerzulauf oder Emulsionszulauf möglich. Diese Form der Emulsionspolymerisation ist besonders bei Monomermischungen mit sehr unterschiedlichen Copolymerisationsparametem von Interesse, da mit diesem Zulaufverfahren einer Erzeugung chemisch sehr uneinheitlicher Polymerisate entgegengewirkt werden kann. Auch das Zulaufverfahren kann kontinuierlich, vorzugsweise in einer Rührkesselkaskade durchgeführt werden.

Allen Verfahren ist gemeinsam, daß die Polymerisation in dem bevorzugten Temperaturbereich von 0 - 100 Grad Celsius mit einer möglichst geringen Menge an Initiator durchgeführt wird.
Das Molekulargewicht der erfindungsgemäßen Polymethacrylat-Formmassen wird mit Hilfe von Übertragungsreglem, bevorzugt Mercaptan, eingestellt. Dabei werden Reglermengen im Bereich von
0,01 - 5 Gew.-%, bevorzugt von
0,1 - 2 Gew.% und ganz besonders bevorzugt im Bereich von
0,2 - 1 Gew.-% bezogen auf das Gesamtmonomere eingesetzt.

Für die erfindungsgemäße Herstellung der Polymethacrylatmassen mit hoher Wärmeformbeständigkeit und hoher Thermostabilität ist damit ein ganz bestimmtes Regler-lnitiator-Verhältnis vorgegeben und ein Regler-Initiator-Verhältnis von
2 : 1 bis 100 000 : 1, bevorzugt von
15 : 1 bis 10 000 : 1, ganz besonders bevorzugt von
20 : 1 bis 1 000 : 1 einzuhalten.

Für die Durchführung der Emulsionspolymerisation werden die zur Herstellung von Kunststoffdispersionen üblichen anionischen, kationischen oder nichtionischen niedermolekularen Emulgiermittel mit Tensidcharakter oder verträgliche Mischungen davon eingesetzt.

Der Gehalt an Emulgator liegt in der Regel bei 0,01 bis 1 Gew.-%, bevorzugt im Bereich von 0,05 bis 0,5 Gew.-%, bezogen auf das eingesetzte Monomere.

Zur besseren Handhabung der Dispersionen können auch geringe Mengen an Salzen oder Puffersubstanzen bei der Emulsionspolymerisation zugesetzt werden. Auch kann der Zusatz von kleineren Mengen an inertem Lösungsmittel, z.B. wenige Prozent Butylacetat, speziell für eine reibungslose Endpolymerisation von Vorteil sein.
Oft ist es von Vorteil, niedermolekulare Stabilisatoren zwecks besserer Einarbeitung nach Beendigung der Polymerisation direkt der Dispersion zuzusetzen.

Aus dem erhaltenen Latex wird das Emulsionspolymerisat nach bekannten Methoden isoliert, z.B. durch Sprühtrmknen, Gefriertrocknen oder durch Koagulation, Filtration und Trocknung. Ein anderes bevorzugtes Verfahren zur Abtrennung des Polymeren aus einem Latex ist aus DE-OS 29 17 321 bekannt. Es beruht auf der Koagulation und Entwässerung des Latex in einem Schneckenextruder, wobei ein geschmolzener Strang des Polymerisats ausgetragen wird.
Ebenso vorteilhaft zur Gewinnung des Polymerisatfeststoffs ist das Verfahren der Gefrierkoagulation. Nach isolierung des Dispersionspolymerisates, vorzugsweise durch Extruderabquetschung, erhält man ein Polymerisat, das in Abhängigkeit der eingestellten Verfahrensparameter, insbesondere in Abhängigkeit von der Reglermenge und dem angewandten Initiator-Regler-Verhältnis, eine Lösungsviskosität η_{sp/c} gemäß DIN 51562 aufweist, die im Bereich von 30 bis 200, insbesondere von 40 bis 150 ml/g, gemessen in Chloroform bei 20 Grad Celsius, liegt. Der Wert für den thermischen Abbau, der TD-Wert von > 290 Grad Celsius gibt an, daß ein solches Material die erforderliche Beständigkeit gegen thermischen Abbau bei Verarbeitungstemperaturen, die beim Extrudieren im Bereich von 270 Grad Celsius liegen und beim Spritzgießen kurzzeitig bis zu 320 Grad Celsius betragen, aufweist, so daß die Materialeigenschaften durch die thermoplastische Verarbeitung praktisch nicht beeinträchtigt werden.

Die Vicat-Erweichungstemperatur (VST), gemessen nach DIN 53 460, der erfindungsgemäßen reinen PMMA-Formmassen erreicht 122 Grad Celsius, d.h. sie liegt deutlich über dem Wert 108 Grad Celsius, der als Richtwert der Vicat-Erweichungstemperatur der handelsüblichen Polymethacrylat-Formmassen gilt. Die Einsatzmöglichkeiten des Materials auf zahlreichen Anwendungsgebieten, insbesondere dem Beleuchtungsgebiet, werden dadurch erheblich verbessert Gleichzeitig sind mechanische Festigkeit und die Beständigkeit gegen Korrosionseinflüsse erhöht. Optische Messungen an unpigmenfierten Formteilen geben Lichtdurchlässigketen nach DIN 1349 von mindestens 91 %.

Infrarot- und ¹³C-NMR-spemroskopische Messungen der erfindungsgemäßen Polymerisate zeigen, daß deren Anteil an syndiotaktisch verknüpften Methylmethacrylat-Bausteinen in der Regel > 60 % syndiotaktischen Triaden liegt. Der Anteil an isotakischen Triaden ist < 6 %.

### Anwendung der neuen Formmassen

Die neuen Polymethylmethacrylat-Formmassen sind thermoplastisch zwischen 160 bis 300 Grad Celsius, vorzugsweise zwischen 200 und 290 Grad Celsius durch Extrusion, Spritzgießen, Pressen usw. zu Formkörpern, Platten oder Folien verarbeitbar.
Die erfindungsgemäßen, thermoplastisch verarbeitbaren Polymethacrylat-Formmassen kommen bevorzugt da zum Einsatz, wo hohe Verarbetungsstabilität, hohe Wärmeformbeständigkeit, geringer Restmonomerengehalt im fertigen Formkörper und hohe Lichtdurchlässigkeit gefordert sind. Ein bevorzugtes Anwendungsgebiet sind daher höher beanspruchte Leuchtenabdeckungen, Auto-scheinwerferabdeckungen, ferner der gesamte Haushaltssektor (Kombination von hoher Wärmeformbeständigkeit und geringem Restmonomerengehalt). Weitere Anwendungsmöglichkeiten erschließen sich durch die hervorragende Witterunngsbeständigkeit der neuen Formmasse. So kann diese neue wärmeformstabile Formmasse mit Vorteil bei der Coextrusion bzw. beim Co-Spritzguß mit Polycarbonat eingesetzt werden. Bevorzugt werden Verbundwerkstoffteile hergestellt, die die Formmasse in Gewichtsanteilen von 1-70% und Bisphenol-A-Polycarbonat in Gewichtsanteilen von 30-99% enthält. Die bereits gute mechanische Festigkeit kann durch Abmischen mit Schlagzähmodifizierungsmitteln verbessert werden. Auch ist die Masse gut geeignet, in Abmischungen mit anderen Kunststoffen deren Wärmeformbeständigkeit oder andere Eigenschaften zu verändern.

Von besonderem Interesse ist auch die Möglichkeit, die aus der erfindungsgemäßen Masse hergestellten Formkörper auf der Oberfläche zu modifizieren, z.B. kratzfest zu beschichten. Aufgrund der guten Witterungsbeständigket der neuen Formmasse kann ein Kratzfestlack auf Polysiloxanbasis (z.B. Acriplex® 100 sr) direkt auf die Oberfläche witterungsstabil aufgebracht werden. Die Aushärtung des Kratzfestlacks kann dabei bei erhöhter Temperatur durchgeführt werden, was kürzere Aushärtezeiten ermöglicht.

### Beispiel 1

### Herstellung der Dispersion

In einem 100 l Rührkessel werden unter Stickstoffatmosphäre
60 g Natriumsalz einer Mischung aus Hexadecan- und Tetradecansulfonsäure
15 g Kaliumperoxodisulfat
0,03 g Eisen-II-sulfat
44000 g destilliertes Wasser
30000 g Methylmethacrylat
180 g 2-Ethylhexythioglykolat
vorgelegt.
Bei einer Temperatur von ca. 25 Grad Celsius wird die Polymerisation durch Zugabe von 2,5 g Natriumbisulfit gestartet. Nach einer kurzen Inhibierungspedode steigt die Innentemperatur langsam an. Eine Stunde nach Reaktionsbeginn werden weitere 120 g des oben genannten Emulgators, gelöst in 500 g Wasser zugesetzt. Durch Kühlung wird so lange bei einer Temperatur <30 Grad Celsius gehalten bis ca. 50 % der Monomeren polymerisiert sind. Danach läßt man die Temperatur auf ca. 60 Grad Celsius ansteigen.

Feststoffgehalt der erhaltenen Dispersionen ca. 40 Gew.-%.

### Gewinnung des Polymerisaffeststoffs durch Gefrierkoagulation

5 kg der oben beschriebenen Dispersion werden bei minus 16 Grad Celsius eingefroren. Nach dem Auftauen wird abfiltriert, mit Wasser gewaschen und getrocknet. Man erhält ein PMMA-Pulver mit einem Restmonomerengehalt von 0,06 Gew.-%. Das Polymere hat eine Lösungsviskosität von: η_{spec/c} = 57 ml/g.
An dem Pulver wird die Thermostabilität gemessen: (siehe Abb. 1).
(Syndiotaktische Triaden: 63 %
Isotaktische Triaden: 2 %)
Syndiotaktische Triaden: 63%
Isotaktische Triaden: 2%
TD = 305 Grad Celsius,
Aus dem Pulver wird eine 3 mm dicke Preßplatte hergestellt:
VST = 117 Grad Celsius.

### Beispiel 2

Die Herstellung der Polymethylmethacrylat-Dispersion wird wie in Beispiel 1 durchgeführt. Die Gewinnung des Polymerisatfeststoffs erfolgt jedoch durch Koagulation und Entwässerung des Latex in einem Schneckenextruder, wobei ein geschmolzener Strang des Polymerisates ausgetragen wird.
(Zur Durchführung siehe DE-OS 29 17 321). Man erhält ein farbloses, glasklares Granulat.
η_{spec/c} 57 ml/g
TD : 305 Grad Celsius

Aus dem Granulat wird eine 2 mm dicke Platte extrudiert. An der Platte wird eine VST von 119 Grad Celsius gemessen. Die Platte enthält einen Restmonomerengehalt von 0,1 % MMA.

### Beispiel 3

Ein Teil des gemäß Beispiel 2 erhaltenen Polymerisalfeststoffes wird mit 0,1 Gew.-% Octadecyl-3-(3,5-di-tert:butyl-4-hydroxyphenyl)-propionat stabilisiert.
Mit diesem Stabilisator enthaltenden Granulat wird ein 3 mm dicker Prüfkörper gespritzt. Messung der Wärmeformbeständigkeit ergibt: VST: 117 Grad Celsius.
Restmonomerengehalt: 0,29 % MMA.

### Beispiel 4

Die gemäß Beispiel 2 hergestellte erfindungsgemäße PMMA-Platte wird mit einem Kratzfestlack auf Basis Polysiloxan (Acriplex® 100 sr) beidseitig beschichtet. Die Aushärtung des Kratzfestlackes erfolgt bei 110 Grad Celsius. Es resultiert eine ebene, nicht verformte, glasklare, hochkratzfeste Polymethacrylplatte.
Lichtdurchlässigkeit: 94 %.

### Beispiel 5

In einem Glaskolben werden
2 000 g destilliertes Wasser
1,6 g Natriumsalz einer Mischung aus Hexadecan- und Tetradecansulfonsäure
400 g Methylmethacrylat
2 g 2-Ethylhexylthioglykolat
unter Argonatmosphäre emulgiert und auf 76 Grad Celsius aufgeheizt. Durch Zugabe von 0,2 g Kaliumperoxodisulfat (gelöst in 20 g Wasser) wird die Polymerisation gestartet. Die Temperatur im Reaktionsgefäß wird durch Kühlen unter 82 Grad Celsius gehalten. Nach Beendigung der stark exothermen Reaktion wird noch 2 Stunden bei 70 Grad Celsius gerührt.

Es resultiert eine stabile Dispersion, aus der der Polymerisatfeststoff durch Gefderkoagulation, nachfolgendem Waschen und Trocknen gewonnen wird. Restmonomerengehalt im Polymerisatpulver: <0,01 % Methylmethacrylat.
η_{spec/c} : 54 ml/g
VST: 117 Grad Celsius, gemessen an einer Preßplatte
Thermostabilität : TD : 310 Grad Celsius.

### Beispiel 6

### Vergleichsbeispiel A

### (Monomerenzulauf, kein Regler)

In einem mit Argon gespülten Reaktionskolben werden
2 000 g destilliertes Wasser und
6 g Natriumsalz einer Mischung aus Hexadecan- und Tetradecansulfonsäure auf 80 Grad Celsius erwärmt. Nach Zugabe von 3 g Kaliumperoxodisulfat werden 400 g Methylmethacrylat langsam zugetropft. (Temperatur im Reaktionskessel 76 - 80 Grad Celsius). Im Verlauf der Reaktion werden weitere 12 g des oben genannten Emulgators zugesetzt. Reaktionsdauer: 4 Stunden. Aufarbeitung der Dispersion wie unter Beispiel 5 beschrieben.

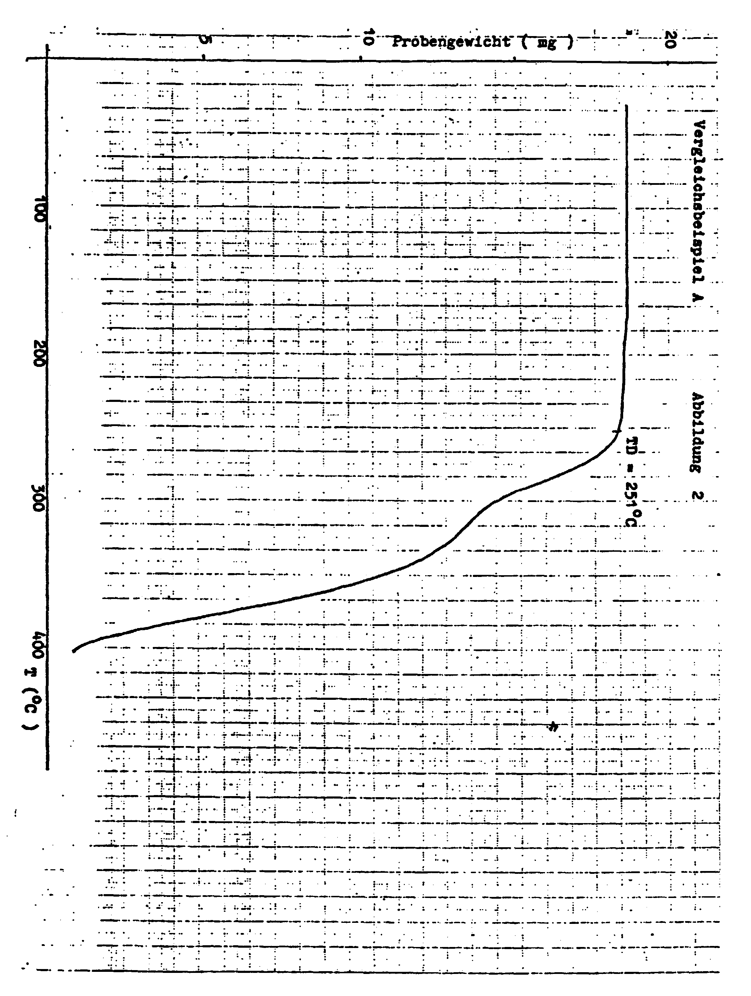

Es resultiert ein Polymerisatpulver η_{spec/c} = 102 ml/g, das zu Platten gepreßt werden kann. VST : 113 Grad Celsius. Das Polymerisat ist jedoch thermisch außerordentlich instabil. TD = 251 Grad Celsius. Abbau in mehreren Stufen, beginnend bei 158 Grad Celsius: siehe Abbildung 2.

### Beispiel 7

### Vergleichsbeispiel B

### (Monomerenzulauf, kein Regler, 2 % Acrylat als Comonomeres zur "Thermostabilisierung")

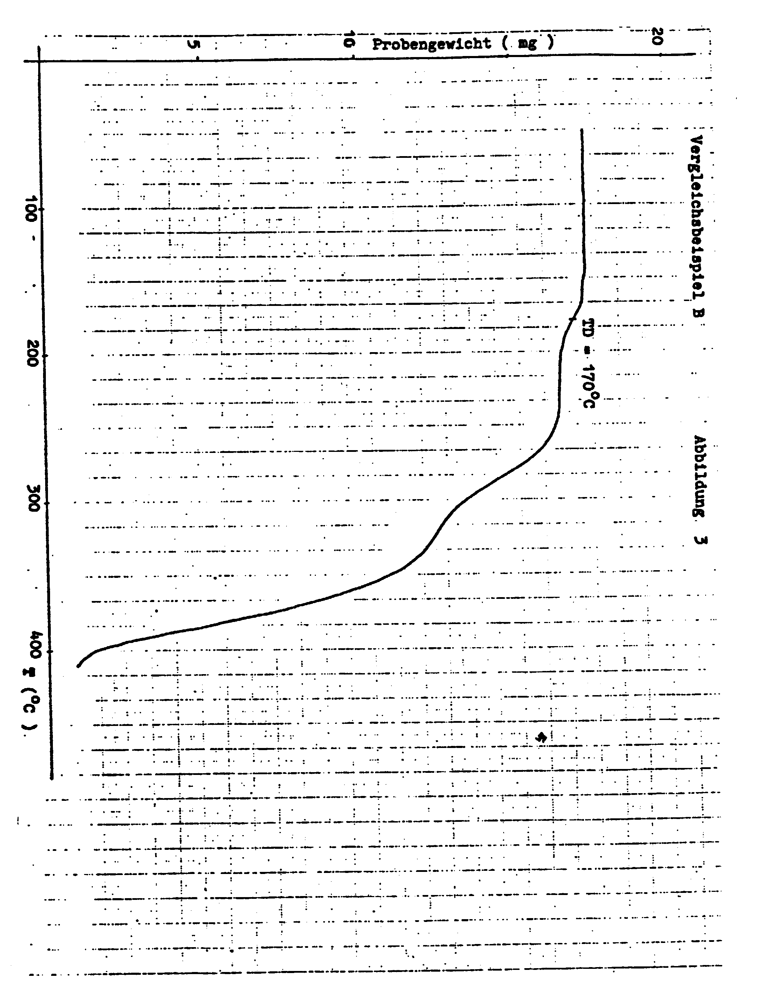

In einem Reakflonsgefäß werden in einer Argonatmosphäre
300 g destilliertes Wasser
0,3 g der unter Beispiel 6 genannten Emulgatormischung
0,75 g Kaliumperoxodisulfat
bei 80 Grad Celsius vorgegeben. In diese Vorlage tropft man innerhalb von 2 Stunden eine Monomerenmischung aus 98 g Methylmethacrylat und 2 g Methylacrylat. Gewinnung des Polymerisatfeststoffes wie In Beispiel 5 beschrieben. Es resultiert eine Formmasse von geringer Wärmeformbeständigkeit und geringer Thermostabilität: Siehe Abbildung 3.
η_{spec/c} = 59 ml/g. VST = 98 Grad Celsius TD = 170 Grad Celsius, Abbau in mehreren Stufen, beginnend bei 155 Grad Celsius.

### Beispiel 8

### Vergleichsbeispiel C

### (Nicht erfindungsgemäßes Initiator/Regler-Verhältnis)

In einem Reaktionsgefäß gemäß Beispiel 6 wird bei 80 Grad Celsius eine Polymethylmethacrylatdispersion hergestellt. Emulsionszulauf in 4 Stunden bei 80 Grad Celsius.
Monomeres :100 % Methylmethacrylat
Regler :0,07 % 2-Ethylhexythioglykolat
Initiator :0,15 % Azo-bis-4-valeriansäure (Natrium-Salz)

Man erhält eine Dispersion, Feststoffgehalt: 45 %, aus der das Polymerisat durch Sprühtrocknung gewonnen wird.
η_{spec/c} = 130 ml/g

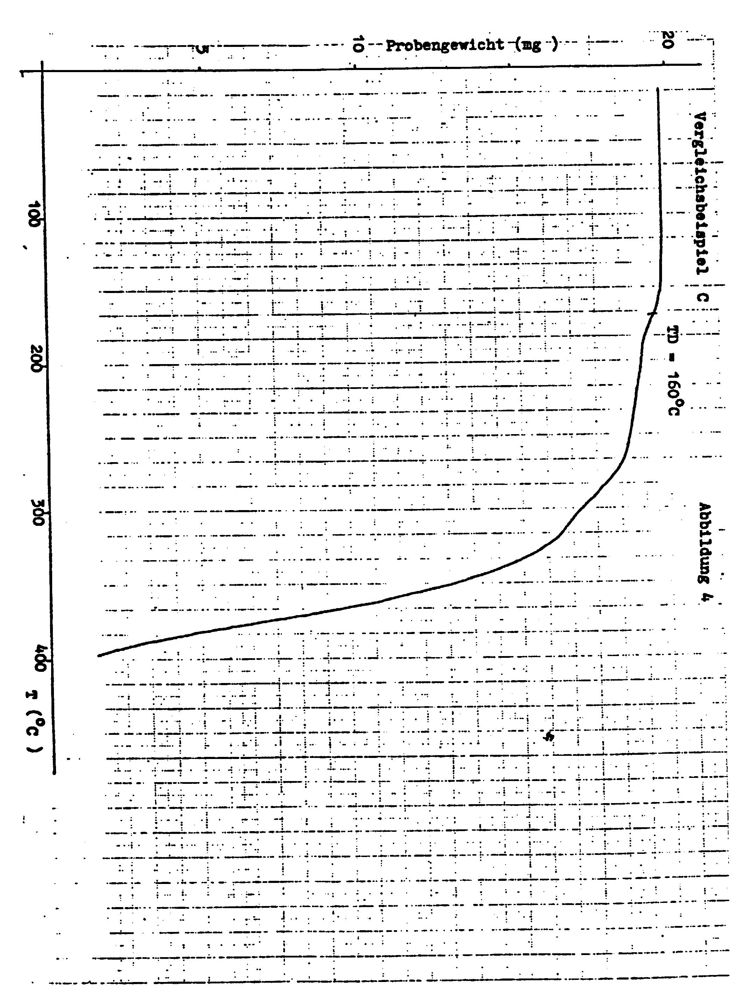

Es resultiert eine Formmasse von geringer Thermostabilität: Siehe Abbildung 4.
TD = 160 Grad Celsius, Abbau in mehreren Stufen.

## Patentansprüche

1. Thermoplastisch verarbeitare Polymethacrylat-Formmasse mit wenigstens 80 Gew.-% Methylmethacrylat-Monomereinheiten und gegebenenfalls bis zu 20 Gew.-% damit copolymerisierbaren Monomeren und einer Lösungsviskosität ηsp/c zwischen 30 und 200 ml/g,
dadurch gekennzeichnet,
daß sie charakterisiert ist durch
a) eine Wärmeformbeständigkeit, gemessen als Vicat-Erweichungstemperatur nach DIN 53 460, von > 112 Grad Celsius,
b) eine Taktizität von > 60 % syndiotaktischen Triaden,
c) einen TD-Wert (2 % Depolymerisation bei einer Aufheizrate von 5 Grad/min) von > 290 Grad Celsius,
d) eine Lichtdurchlässigkeit nach DIN 1349 von > 91 %,
e) einen Restmonomeren-Gehalt von < 0,5 % und
f) eine Herstellung durch Emulsionspolymerisation mit nachfolgender Abtrennung des Wassers.

2. Thermoplastisch verarbeitbare Polymethacrylat-Formmasse gemäß Anspruch 1, dadurch gekennzeichnet, daß sie mehr als 95 Gew.-% Methylmethacrylat-Monomereinheiten enthält und eine Vicat-Erweichungstemperatur von > 112 Grad Celsius besitzt.

3. Thermoplastisch verarbeitbare Polymethacrylat-Formmasse gemäß Anspruch 1, dadurch gekennzeichnet, daß sie 98 bis 100 Gew.-% Methylmethacrylat-Monomereinheiten enthält und eine Vicat-Erweichungstemperatur von ≧ 116 Grad Celsius besitzt.

4. Thermoplastisch verarbeitbare Polymethacrylat-Formmasse gemäß den Ansprüchen 1 bis 3, dadurch gekennzeichnet, daß sie einen Restmonomerengehalt < 0,3 % besitzt.

5. Thermoplastisch verarbeitbare Polymethacrylat-Formmasse gemäß den Ansprüchen 1 bis 4, dadurch gekennzeichnet, daß sie einen Restmonomerengehalt < 0,1 % besitzt.

6. Thermoplastisch verarbeitbare Polymethacrylat-Formmasse gemäß Anspruch 1, dadurch gekennzeichnet, daß mindestens 75 % der Polymermoleküle entsprechend folgender Formel II 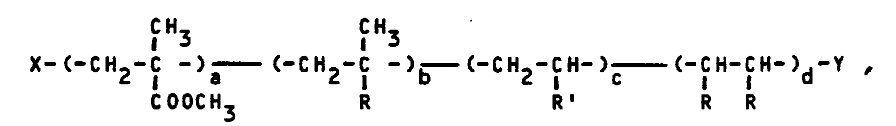 zusammengesetzt sind:
worin
R : CN, COOR", CONHR''' oder R und R im Anteil d zusammengenommen eine Anhydrid- bzw. eine mit R" substituierte Imidbrücke, mit R": H, Alkyl oder Alkenyl mit 2 bis 6 C-Atomen, Cycloalkyl mit 5 bis 12 C-Atomen, Aryl mit 6 bis 12 C-Atomen, sowie
R"CH₃,R".
R': R, R", R''', OCOR'''
a = 0,8 bis 1, vorzugsweise 0,95 - 1, besonders bevorzugt 0,98 - 1
b = 0 bis 0,2, vorzugsweise 0 - 0,05, besonders bevorzugt 0 - 0,02
b = 0 bis 0,2, vorzugsweise 0 - 0,05, besonders bevorzugt 0 - 0,02
c = 0 bis 0,2, vorzugsweise 0 - 0,05, besonders bevorzugt 0 - 0,02
d = 0 bis 0,2, vorzugsweise 0 - 0,05, besonders bevorzugt 0 - 0,02
X und Y Teile des Kettenübertragungsreglers XY sind, insbesondere XY = ASH, wobei mit X = AS, A ein aliphatischer oder aromatischer Rest mit 1 bis 18 C-Atomen, der auch funktionelle Gruppen, wie Carboxylgruppen, Estergruppen oder OH-Gruppen enthalten kann,
oder daß XY halogenhaltige Verbindungen oder Verbindungen mit einem beweglichen Wasserstoffatom sind, wobei dann X ein aliphatischer oder aromatischer Kohlenwasserstoff, der insbesondere mit Halogen substituiert sein kann, und Y ein Halogenatom oder ein Wasserstoffatom ist.

7. Thermoplastisch verarbeitbare Polymethacrylat-Formmasse gemäß Anspruch 6, dadurch gekennzeichnet, daß wenigstens 90 Gew.-% der Polymermoleküle entsprechend Formel II aufgebaut sind.

8. Thermoplastisch verarbeitbare Polymethacrylat-Formmasse gemäß Anspruch 7, dadurch gekennzeichnet, daß wenigstens 95 Gew.-% der Polymermoleküle entsprechend Formel II aufgebaut sind.

9. Verfahren zur Herstellung einer Polymethacrylat-Formmasse gemäß den Ansprüchen 1 bis 8, dadurch gekennzeichnet, daß sie durch Emulsionspolymerisation der entsprechenden Monomeren in Gegenwart einer Initiator-Regler-Kombination in einem Temperaturbereich von 0 bis 100 Grad Celsius hergestellt und anschließend die Wasserphase abgetrennt wird.

10. Verfahren nach Anspruch 9, dadurch gekennzeichnet, daß das Initiator-Regler-Verhältnis 1 : 2 bis 1 : 100 000 Mol/Mol beträgt.

11. Verfahren nach den Ansprüchen 9 und 10, dadurch gekennzeichnet, daß das Initiator-Regler-Verhältnis 1 : 5 bis 1 : 10 000 beträgt.

12. Verfahren nach den Ansprüchen 9 bis 11, dadurch gekennzeichnet, daß das Initiator-Regler-Verhätnis 1 : 20 bis 1 : 1000 beträgt.

13. Verfahren nach den Ansprüchen 9 bis 12, dadurch gekennzeichnet, daß die Inifiatormenge 0,0001 bis 1, vorzugsweise 0,001 bis 0,2, besonders bevorzugt 0,002 bis 0,05 Gew.-%, bezogen auf das Monomere, beträgt

14. Verfahren nach den Ansprüchen 9 bis 13, dadurch gekennzeichnet, daß das Verfahren batchweise durchgeführt wird.

15. Verfahren nach den Ansprüchen 9 bis 13, dadurch gekennzeichnet, daß das Verfahren kontinuierlich durchgeführt wird.

16. Verfahren gemäß Anspruch 15, dadurch gekennzeichnet, daß das Monomere bzw. die Monomerenmischung an höchstens 3 Positionen der kontinuierlich arbeitenden Emulsionspolymerisafionsanlage zugesetzt wird.

17. Verfahren gemäß den Ansprüchen 14 bis 16, dadurch gekennzeichnet, daß bereits >45 Gew.-% der Gesamtmonomeren dem Polymerisationsansatz zugesetzt wird, bevor 20 Gew.% der Monomermischung polymerisiert sind.

18. Verfahren gemäß Anspruch 17, dadurch gekennzeichnet, daß bereits > 90 Gew.% der Gesamtmonomeren dem Polymerisationsansatz zugesetzt sind, bevor 10 Gew.-% der Monomermischung polymerisiert sind.

19. Verfahren gemäß den Ansprüchen 15 bis 18, dadurch gekennzeichnet, daß das Verfahren in einer Rührkesselkaskade durchgeführt wird.

20. Verfahren gemäß den Ansprüchen 15 bis 18, dadurch gekennzeichnet, daß das Verfahren in einem Rohrreaktor durchgeführt wird.

21. Verfahren zur Herstellung einer Polymethacrylat-Formmasse gemäß den Ansprüchen 9 bis 20, dadurch gekennzeichnet, daß der Polymerisatfestsoff durch Gefrierkoagulation gewonnen wird.

22. Verfahren gemäß den Ansprüchen 9 bis 20, dadurch gekennzeichnet, daß der Polymerisaffeststoff durch Abquetschen mit dem Extruder gewonnen wird.

23. Verwendung von Polymethacrylat-Formmassen nach den Ansprüchen 1-22, dadurch gekennzeichnet, daß daraus extrudierte Platten und Folien mit einer VST > 112 Grad C und einem Restmonomerengehalt < 0,2 Gew.-% hergestellt werden.

24. Verwendung von Polymethacrylat-Formmassen nach den Ansprüchen 1-22, dadurch gekennzeichnet, daß daraus extrudierte Platten und Folien mit einer VST > 116 Grad C und einem Restmonomerengehalt < 0,2 Gew.-% hergestellt werden.

25. Verwendung von Polymethacrylat-Formmassen nach den Ansprüchen 1-22, dadurch gekennzeichnet, daß daraus Spritzgußteile mit einer VST > 112 Grad C und einem Restmonomerengehalt < 0,5 Gew.-% hergestellt werden.

26. Verwendung von Polymethacrylat-Formmassen nach den Ansprüchen 1-22, dadurch gekennzeichnet, daß daraus Spritzgußteile mit einer VST > 114 Grad C und einem Restmonomerengehalt > 0,3 Gew.-% hergestellt werden.

27. Verwendung von Polymethacrylat-Formmassen nach den Ansprüchen 1-22, dadurch gekennzeichnet, daß daraus gemäß den Ansprüchen 23 bis 26 hergestellte Formkörper kratzfest ausgerüstet sind.

28. Verwendung von Polymethacrylat-Formmassen nach den Ansprüchen 1-22, dadurch gekennzeichnet, daß daraus in Gewichtsanteilen von 1 bis 70% und Bisphenol A-Polycarbonat in Gewichtsanteilen von 30 bis 99% ein Verbundwerkstoff-Teil hergestellt wird.

## Claims

1. Polymethacrylate moulding composition which can be processed thermoplastically having at least 80 wt.% of methylmethacrylate monomer units, and optionally up to 20 wt.% of monomers which can be copolymerised with it and having a solution viscosity ηsp/c between 30 and 200 ml/g, characterised in that it is characterised by
a) a thermal dimensional stability of > 112 degrees Celsius, measured as Vicat softening temperature in accordance with DIN 53 460,
b) a tacticity of > 60% of syndiotactic triads,
c) a TD value (2% depolymerisation at a heating rate of 5 degrees/minute) of > 290 degrees Celsius,
d) a light permeability of > 91% in accordance with DIN 1349,
e) a residual monomer content of < 0.5%, and
f) a preparation by emulsion polymerisation with subsequent separation of the water.

2. Polymethacrylate moulding composition which can be processed thermoplastically according to claim 1, characterised in that it contains more than 95 wt.% of methylmethacrylate monomer units, and has a Vicat softening temperature of > 112 degrees Celsius.

3. Polymethacrylate moulding composition which can be processed thermoplastically according to claim 1, characterised in that it contains 98 to 100 wt.% of methylmethacrylate monomer units, and has a Vicat softening temperature of ≥ 116 degrees Celsius.

4. Polymethacrylate moulding composition which can be processed thermoplastically according to claims 1 to 3, characterised in that it has a residual monomer content < 0.3%.

5. Polymethacrylate moulding composition which can be processed thermoplastically according to claims 1 to 4, characterised in that it has a residual monomer content < 0.1%.

6. Polymethacrylate moulding composition which can be processed thermoplastically according to claim 1, characterised in that at least 75% of the polymer molecules are composed of the following formula II 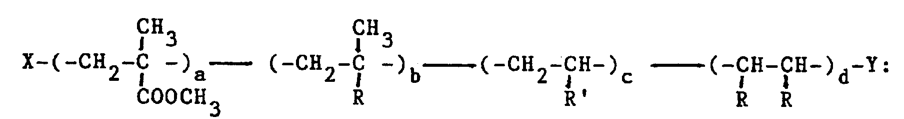 wherein R:CN, COOR", CONHR''' or R and R taken together in part d is an anhydride bridge or an imide bridge substituted by R",
where R":H, alkyl or alkenyl having 2 to 6 C atoms, cycloalkyl having 5 to 12 C atoms, aryl having 6 to 12 C atoms, and
R":CH₃, R".
R':R, R", R''', OCOR'''
a = 0.8 to 1, preferably 0.95-1, particularly preferably 0.98-1
b = 0 to 0.2, preferably 0-0.05, particularly preferably 0-0.02
b = 0 to 0.2, preferably 0-0.05, particularly preferably 0-0.02
c = 0 to 0.2, preferably 0-0.05, particularly preferably 0-0.02
d = 0 to 0.2, preferably 0-0.05, particularly preferably 0-0.02
X and Y parts of the chain transfer modifier XY are, in particular XY = ASH, wherein where X = AS, A is one aliphatic or aromatic radical having 1 to 18 C atoms which may also contain functional groups, such as carboxyl groups, ester groups or OH groups, or in that XY are halogen-containing compounds or compounds having a movable hydrogen atom, wherein X is then an aliphatic or aromatic hydrocarbon which may be substituted in particular by halogen, and Y is a halogen atom or a hydrogen atom.

7. Polymethacrylate moulding composition which can be processed thermoplastically according to claim 6, characterised in that at least 90 wt.% of the polymer molecules are composed of the formula II.

8. Polymethacrylate moulding composition which can be processed thermoplastically according to claim 7, characterised in that at least 95 wt.% of the polymer molecules are composed of the formula II.

9. Process for the preparation of a polymethacrylate moulding composition according to claims 1 to 8, characterised in that it is prepared by emulsion polymerisation of the corresponding monomers in the presence of an initiator-modifier combination in a temperature range from 0 to 100 degrees Celsius, and the water phase is subsequently separated off.

10. Process according to claim 9, characterised in that the initiator-modifier ratio is 1:2 to 1:100,000 mole/mole.

11. Process according to claims 9 and 10, characterised in that the initiator-modifier ratio is 1:15 to 1:10,000.

12. Process according to claims 9 to 11, characterised in that the initiator-modifier ratio is 1:20 to 1:1,000.

13. Process according to claims 9 to 12, characterised in that the amount of initiator is 0.0001 to 1, preferably 0.001 to 0.2, particularly preferably 0.002 to 0.05, wt.%, relative to the monomer.

14. Process according to claims 9 to 13, characterised in that the process is carried out batchwise.

15. Process according to claims 9 to 13, characterised in that the process is carried out continuously.

16. Process according to claim 15, characterised in that the monomer or the monomer mixture is added at 3 points at the most to the continuously operating emulsion polymerisation plant.

17. Process according to claims 14 to 16, characterised in that > 45 wt.% of the total monomer is already added to the polymerisation mixture, before 20 wt.% of the monomer mixture is polymerised.

18. Process according to claim 17, characterised in that > 90 wt.% of the total monomer is already added to the polymerisation mixture, before 10 wt.% of the monomer mixture is polymerised.

19. Process according to claims 15 to 18, characterised in that the process is carried out in a stirred vessel cascade.

20. Process according to claims 15 to 18, characterised in that the process is carried out in a tube reactor.

21. Process for the preparation of a polymethacrylate moulding composition according to claims 9 to 20, characterised in that the polymer solid is recovered by freeze coagulation.

22. Process according to claims 9 to 20, characterised in that the polymer solid is recovered by squeezing with an extruder.

23. Use of polymethacrylate moulding compositions according to claims 1-22, characterised in that extruded plates and films having a VST > 112 degrees C and a residual monomer content < 0.2 wt.% are prepared therefrom.

24. Use of polymethacrylate moulding compositions according to claims 1-22, characterised in that extruded plates and films having a VST > 116 degrees C and a residual monomer content < 0.2 wt.% are prepared therefrom.

25. Use of polymethacrylate moulding compositions according to claims 1-22, characterised in that injection mouldings having a VST > 112 degrees C and a residual monomer content < 0.5 wt.% are produced therefrom.

26. Use of polymethacrylate moulding compositions according to claims 1-22, characterised in that injection mouldings having a VST > 114 degrees C and a residual monomer content > 0.3 wt.% are produced therefrom.

27. Use of polymethacrylate moulding compositions according to claims 1-22, characterised in that moulded bodies produced therefrom in accordance with claims 23 to 26 have a scratch-resistance nature.

28. Use of polymethacrylate moulding compositions according to claims 1-22, characterised in that a composite part is prepared from 1 to 70% parts by weight thereof and 30 to 99% parts by weight of bisphenol A polycarbonate.

## Revendications

1. Masse à mouler à base de polyméthacrylate transformable à l'état thermoplastique, contenant au moins 80% en poids d'unités monomères de méthacrylate de méthyle et éventuellement jusqu'à 20% en poids de monomères copolymérisables avec celui-ci et ayant une viscosité en solution ηsp/c comprise entre 30 et 200 ml/g, caractérisée en ce qu'elle présente les caractéristiques suivantes:
a) une stabilité dimensionnelle à chaud de > 112°C, mesurée en tant que température de ramollissement de Vicat selon la DIN 53 460,
b) une tacticité > 60% de triades syndiotactiques,
c) une valeur TD (2% de dépolymérisation à une vitesse de chauffage de 5°C/mn) de > 290°C,
d) une transmission de la lumière par translucidité selon la DIN 1349 de > 91%,
e) une teneur en monomères résiduels de < 0,5% et
f) une préparation par polymérisation en émulsion suivie de séparation de l'eau.

2. Masse à mouler à base de polyméthacrylate transformable à l'état thermoplastique selon la revendication 1, caractérisée en ce qu'elle contient plus de 95% en poids d'unités monomères de méthacrylate de méthyle et présente une température de ramollissement de Vicat de > 112°C.

3. Masse à mouler à base de polyméthacrylate transformable à l'état thermoplastique selon la revendication 1, caractérisée en ce qu'elle contient de 98% à 100% en poids d'unités monomères de méthacrylate de méthyle et présente une température de ramollissement de Vicat de ≥ 116°C.

4. Masse à mouler à base de polyméthacrylate transformable à l'état thermoplastique selon l'une quelconque des revendications 1 à 3, caractérisée en ce qu'elle présente une teneur en monomères résiduels de < 0,3%.

5. Masse à mouler à base de polyméthacrylate transformable à l'état thermoplastique selon l'une quelconque des revendications 1 à 4, caractérisée en ce qu'elle présente une teneur en monomères résiduels de < 0,1%.

6. Masse à mouler à base de polyméthacrylate transformable à l'état thermoplastique selon la revendication 1, caractérisée en ce qu'au moins 75% des molécules de polymère ont une composition correspondant à la formule Il suivante 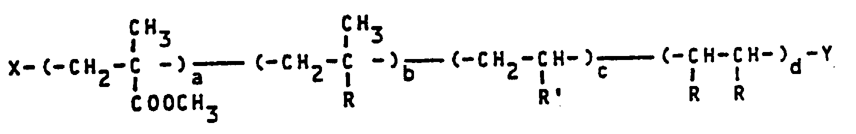 dans laquelle
R:CN, COOR", CONHR''' ou R et R, pris ensemble dans le constituant d, représentent un pont anhydride ou un pont imide substitué par R",
avec R" = H, alkyle ou alcényle à 2-6 atomes de carbone, cycloalkyle à 5-12 atomes de carbone ou aryle à 6-12 atomes de carbone,
R''' = CH₃, R";
R':R, R", R''', OCOR''',
a = 0,8 à 1, de préférence 0,95-1 et notamment 0,98-1,
b = 0 à 0,2 de préférence 0-0,05 et notamment 0-0,02,
c = 0 à 0,2, de préférence 0-0,05 et notamment 0-0,02,
d = 0 à 0,2 de préférence 0-0,05 et notamment 0-0,02
X et Y sont des parties du régulateur de transfert de chaîne, en particulier XY = ASH, auquel cas, avec X = AS, A est un reste aliphatique ou aromatique à 1-18 atomes de carbone qui peut aussi contenir des groupements fonctionnels, tels que des groupements carboxyle, des groupements ester ou des groupements OH, ou XY = composés halogénés ou composés comportant un atome d'hydrogène mobile, X étant alors un hydrocarbure aliphatique ou aromatique qui peut être éventuellement substitué par un halogène et Y étant un atome d'halogène ou un atome d'hydrogène.

7. Masse à mouler à base de polyméthacrylate transformable à l'état thermoplastique selon la revendication 6, caractérisée en ce qu'au moins 90% en poids des molécules de polymère ont une constitution correspondant à la formule Il.

8. Masse à mouler à base de polyméthacrylate transformable à l'état thermoplastique selon la revendication 7, caractérisée en ce qu'au moins 95% en poids des molécules de polymère ont une constitution correspondant à la formule Il.

9. Procédé de préparation d'une masse à mouler à base de polyméthacrylate selon l'une quelconque des revendications 1 à 8, caractérisé en ce qu'elle est préparée par polymérisation en émulsion des monomères correspondants en présence d'une combinaison initiateur-régulateur dans une gamme de température de 0 à 100°C, puis la phase aqueuse est séparée.

10. Procédé selon la revendication 9, caractérisé en ce que le rapport initiateur/régulateur est compris entre 1:2 et 1:100 000 mole/moles.

11. Procédé selon la revendication 9 ou 10, caractérisé en ce que le rapport initiateur/régulateur est compris entre 1:15 et 1:10 000.

12. Procédé selon l'une quelconque des revendications 9 à 11, caractérisé en ce que le rapport initiateur/régulateur est compris entre 1:20 et 1:1000.

13. Procédé selon l'une quelconque des revendications 9 à 12, caractérisé en ce que la quantité d'initiateur est comprise entre 0,001 et 1, de préférence entre 0,001 et 0,2, et notamment entre 0,002 et 0,05% en poids par rapport au monomère.

14. Procédé selon l'une quelconque des revendications 9 à 13, caractérisé en ce qu'il est conduit par charges successives.

15. Procédé selon l'une quelconque des revendications 9 à 13, caractérisé en ce qu'il est conduit en continu.

16. Procédé selon la revendication 15, caractérisé en ce que le monomère ou le mélange de monomères est introduit en 3 points au maximum de l'installation de polymérisation en émulsion fonctionnant en continu.

17. Procédé selon l'une quelconque des revendications 14 à 16, caractérisé en ce que > 45% en poids de la totalité des monomères sont déjà ajoutés à la charge de polymérisation avant que 20% en poids du mélange de monomères ne soient polymérisés.

18. Procédé selon la revendication 17, caractérisé en ce que > 90% en poids de la totalité des monomères sont déjà ajoutés à la charge de polymérisation avant que 10% en poids du mélange de monomères ne soient polymérisés.

19. Procédé selon l'une quelconque des revendications 15 à 18, caractérisé en ce qu'il est conduit dans une cascade de cuves comportant un agitateur.

20. Procédé selon l'une quelconque des revendications 15 à 18, caractérisé en ce qu'il est conduit dans un réacteur tubulaire.

21. Procédé de préparation d'une masse à mouler à base de polyméthacrylate selon l'une quelconque des revendications 9 à 20, caractérisé en ce que la matière solide du produit de polymérisation est obtenue par coagulation de congélation.

22. Procédé selon l'une quelconque des revendications 9 à 20, caractérisé en ce que la matière solide du produit de polymérisation est obtenue par exprimage dans l'extrudeuse.

23. Utilisation de masses à mouler à base de polyméthacrylate selon l'une quelconque des revendications 1 à 22, caractérisée en ce que l'on fabrique, à partir de ces masses, des plaques et des feuilles extrudées ayant une température de ramollissement de Vicat > 112°C et une teneur en monomères résiduels < 0,2% en poids.

24. Utilisation de masses à mouler à base de polyméthacrylate selon l'une quelconque des revendications 1 à 22, caractérisée en ce que l'on fabrique, à partir de ces masses, des plaques et des feuilles extrudées ayant une température de ramollissement de Vicat > 116°C et une teneur en monomères résiduels < 0,2% en poids.

25. Utilisation de masses à mouler à base de polyméthacrylate selon l'une quelconque des revendications 1 à 22, caractérisée en ce que l'on fabrique, à partir de ces masses, des pièces moulées par injection ayant une température de ramollissement de Vicat > 112°C et une teneur en monomères résiduels < 0,5% en poids.

26. Utilisation de masses à mouler à base de polyméthacrylate selon l'une quelconque des revendications 1 à 22, caractérisée en ce que l'on fabrique, à partir de ces masses, des pièces moulées par injection ayant une température de ramollissement de Vicat > 114°C et une teneur en monomères résiduels < 0,3% en poids.

27. Utilisation de masses à mouler à base de polyméthacrylate selon l'une quelconque des revendications 1 à 22, caractérisée en ce que des pièces moulées fabriquées à partir de ces masses selon l'une quelconque des revendications 23 à 26 sont garnies d'un revêtement résistant à la rayure.

28. Utilisation de masses à mouler à base de polyméthacrylate selon l'une quelconque des revendications 1 à 22, caractérisée en ce qu'on fabrique, à partir de ces masses dans des proportions en poids de 1 à 70% et de bisphénol A-polycarbonate dans des proportions en poids de 30 à 99%, une pièce de matériau composite.
